# EUROPÄISCHE PATENTSCHRIFT

(11) **EP 1 996 627 B1**
(45) Veröffentlichungstag und Bekanntmachung des Hinweises auf die Patenterteilung: **31.08.2011**
(21) Anmeldenummer: 07726826.6
(22) Anmeldetag: 13.03.2007
(51) Int. Cl.: C08F 2/00, C08K 5/00

(54) **VERFAHREN ZUR HERSTELLUNG VON POLYMEREN NANOPARTIKELN**
METHOD FOR PRODUCING POLYMER NANOPARTICLES
PROCÉDÉ DE FABRICATION DE NANOPARTICULES POLYMÈRES

(30) Priorität: 13.03.2006 EP 06111049
(43) Veröffentlichungstag der Anmeldung: 03.12.2008
(73) Patentinhaber: BASF SE, 67056 Ludwigshafen (DE)
(72) Erfinder: WAGENBLAST, Gerhard, 67157 Wachenheim (DE)
(86) Internationale Anmeldenummer: PCT/EP2007/052320
(87) Internationale Veröffentlichungsnummer: WO 2007/104750

(56) Entgegenhaltungen:
- JP-A- 2005 043 660
- JP-A- 2005 053 100
- KR-A- 2005 067 922
- KR-A- 2006 016 413
- US-B1- 6 403 672

## Beschreibung

Die vorliegende Erfindung bezieht sich auf ein Verfahren zur Herstellung von polymeren Nanopartikeln, bei dem ausgehend von polymerisationsfähigen Monomeren unter Einsatz von Lichtenergie das polymere Produkt gewonnen wird. Sie betrifft ferner die polymeren Nanopartikel, die Effektstoffe und/oder Wirkstoffe enthalten können sowie deren Verwendung.

Nanopartikel spielen in vielen Bereichen der industriellen Produktion eine zunehmende Rolle. Angefangen von der Chip-Technologie über die Gummiherstellung bis hin zur Medizin und Kosmetik finden Nanopartikel aufgrund ihrer besonderen Materialeigenschaften interessante Einsatzmöglichkeiten. Im Allgemeinen weisen Nanopartikel deutlich andere physikalische und chemische Eigenschaften auf als ihre grobkörnigen Analoga. Dies führt zu besonderen Anwendungsmöglichkeiten, da bei einem kleinen Partikelvolumen eine sehr hohe und auch chemisch variable Oberfläche zur Verfügung gestellt werden kann. So können beispielsweise mit polymeren Nanopartikeln die im Material auftretenden Energien stark gestreut werden, was beispielsweise im Bereich der Gummiindustrie zu einer erhöhten Elastizität von Reifen und einem verminderten Rollwiderstand geführt hat. Polymere Nanopartikel lassen sich jedoch auch in den Bereichen Textilien und Papierherstellung sinnvoll zum Einsatz bringen.

Aus US 6,403,672 ist ein Verfahren zur Herstellung von polymeren Nanopartikeln bekannt, bei dem Monomere in einem nicht-wässrigen Lösungsmittel belichtet werden.

Das Dokument KR 2006 0016413 beschreibt eine Photopolymer-Zusammensetzung enthaltend ein photopolymerisierbares Monomer, einen polymeren Binder, einen Photoinitiator und Nanopartikel mit photoreaktiven Gruppen an der Oberfläche.

Das Dokument KR 2005 0067922 beschreibt ein Verfahren zur Herstellung monodisperser Nanopartikel unter Verwendung von einem so genannten Iniferters (initiator, transfer agent and terminator), z.B. 4-Diethyl-thiocarbonyl-sulfanylmethyl Benzoesäure.

Das Dokument JP 2005 053100 beschreibt ein Ink-jet-Papier mit einer porösen Schicht, umfassend eine hochmolekulare, hydrophile Verbindung und einen Photopolymerisationsinitator.

Das Dokument JP 2005 043660 beschreibt eine photosensitive Druckplatte enthaltend Partikel von 1 bis 100 nm.

Eine Aufgabe der vorliegenden Erfindung ist es, ein Verfahren zur Herstellung von polymeren kleinen Partikeln, insbesondere von Nanopartikeln bereitzustellen, bei dem unter Einsatz von polymerisationsfähigen Monomeren, insbesondere von Monomeren, die durch Eintrag von Lichtenergie polymerisierbar sind, und gegebenenfalls weiteren Hilfsstoffen unter Einsatz von Lichtenergie ein polymeres Produkt mit Nanopartikelstruktur kostengünstig hergestellt werden kann.

Die Erfindung hat ein Verfahren zur Herstellung von polymeren Nanopartikeln zum Gegenstand, bei dem aus einen oder mehreren polymerisationsfähigen Monomeren (M) sowie einem oder mehreren Dispergiermitteln (D) und/oder einem oder mehreren Effektstoffe (E) aus der Gruppe der Farbstoffe, optischen Aufheller, UV-Absorber und Pigmente und/oder einem oder mehreren Wirkstoffen (W) aus der Gruppe der Pestizide, Biozide, Pharmaka und Duftstoffe in ein Nichtlösemittel (N), wie beispielsweise Wasser, zunächst eine Voremulsion erzeugt wird und diese dann durch ein kontinuierliches Verfahren des Feinemulgierens unter Eintrag von Scherenergie behandelt wird, wobei die emulgierten Teilchen enthaltend die Monomere eine mittlere Größe von 0,01 µm bis 3,8 µm erhalten, und anschließend mit einer UV-Lichtquelle (L) belichtet und photopolymerisiert wird, wobei als Nicht-Lösemittel (N) Wasser eingesetzt wird, und wobei das kontinuierliche Verfahren des Feinemulgierens unter Anwendung von Ultraschall, Hochdruckemulgieren und/oder Rotor-Stator-Verfahren erfolgt.

Durch die Lichtquelle (L) wird dabei die notwendige Energie für die Umsetzung aufgebracht, es kommt zu der gewünschten Photo-Polymerisation.

Als Monomere (M) können typische durch Licht, insbesondere durch UV-Licht polymerisationsfähige monomere Rohstoffe, beispielsweise multifunktionelle Acrylate verwendet werden. Es können beispielsweise Mono-, Di- oder Triacrylate (siehe z. B. Produkte der Serie Laromer^{®}, beispielsweise Laromer LR 8863, ein ethoxyliertes Trimethylolpropantriacrylat; Hersteller BASF, Ludwigshafen) verwendet werden. Auch ist es möglich, unterschiedliche durch UV-Licht polymerisationsfähige Monomere als Mischung zum Einsatz zu bringen. Hinsichtlich der durch Photo-Polymerisation polymerisierbaren Monomere wird auf die Literatur verwiesen.

Die vorliegende Erfindung betrifft insbesondere ein Verfahren zur Herstellung von polymeren Nanopartikeln, bei dem ein oder mehrere polymerisationsfähige Monomere (M) sowie ein oder mehrere Dispergiermittel (D) und/oder ein oder mehrere Effektstoffe (E) und/oder ein oder mehrere Wirkstoffe in ein Nicht-Lösemittel (N), vorzugsweise Wasser, eingebracht werden, und die daraus resultierende Emulsion mit einer geeigneten Lichtquelle (L), insbesondere UV-Licht, belichtet wird, wobei es zu einer Photo-Polymerisation der Monomere (M) kommt.

Unter einem Nicht-Lösemittel wird in der vorliegenden Erfindung eine Flüssigkeit verstanden, in der die Monomere sowohl bei Raumtemperatur wie auch bei der Prozesstemperatur eine Löslichkeit von weniger als 5 g/l, insbesondere weniger als 1 g/l aufweisen. Bevorzugt wird als Nicht-Lösemittel Wasser eingesetzt oder ein Gemisch von Wasser mit einer wassermischbaren weiteren Flüssigkeit. Im Prinzip ist es jedoch auch möglich andere Flüssigkeiten als Wasser oder Flüssigkeitsgemische als Nicht-Lösemittel zu verwenden. Das Nicht-Lösemittel (N) kann auch gelöste Komponenten enthalten, beispielsweise ein Dispergiermittel (D).

In einer Ausführungsform der Erfindung kommen mindestens zwei unterschiedliche Monomere (M) als Mischung zum Einsatz. Bevorzugt kommen z. B. zwei oder drei unterschiedliche Acrylat-Monomere zum Einsatz.

Bei dem Verfahren zur Herstellung von polymeren Nanopartikeln werden bevorzugt die polymerisationsfähigen Monomere (M) zunächst mit einem Photoinitiator (P) und gegebenenfalls ein oder mehreren Effektstoffen (E) und/oder ein oder mehreren Wirkstoffen (W) vermischt. Anschließend wird diese Mischung mit dem Nicht Lösemittel gemischt. Es wird eine Emulsion mit dem Nicht-Lösemittel (N) und dem Dispergiermittel (D) erzeugt, und die so gebildete Emulsion, auch als Rohemulsion bezeichnet, gegebenenfalls nach Erzeugung einer durch Eintrag von Scherenergie erzeugten Feinemulsion, einem Belichtungsschritt mit UV-Licht unterzogen. Die Emulsionen können neben dem Dispergiermittel (D) auch ein Schutzkolloid (S) enthalten.

Geeignete Emulgatoren sind handelsüblichen Dispergiermittel beziehungsweise Netzmittel. Die verwendeten Emulgatoren bzw. Dispergiermittel (D) können anionischer, kationischer als auch nichtionischer Natur sein. Zu den anionischen Emulgatoren zählen Alkali- und Ammoniumsalze von Alkylsulfaten (Alkylrest z.B. von C₈ bis C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄ bis C₉), Ethoxylate langkettiger Alkohole (EO-Grad: 3 bis 50, Alkylrest: C₈ bis C₃₆), sowie Polyethylenoxid/Polypropylenoxid-Blockcopolymere. Geeignete Beispiele sind ferner Lignosulfonate, Naphthalinsulfonsäure-Formaldehyd-Kondensate und Phenol-Kresol-Sulfanilinsäure-Formaldehyd-Kondensate.

Erfindungsgemäß einsetzbare natürliche oder halbsynthetische Schutzkolloide (S) sind beispielsweise Gelatine, Fischgelatine, Stärke oder Stärkederivate, wie Dextrine, Pektin, Gummi arabicum, Casein, Caseinat, Alginate, Cellulose und Cellulosederivate, wie Methylcellulose, Carboxymethylcellulose, Hydroxypropylcellulose oder Hydroxypropylmethylcellulose.

Verwendbare synthetische Schutzkolloide sind wasserlösliche Homo- oder Copolymere, wobei es sich um Neutralpolymere, kationische Polymere und anionische Polymere handeln kann. Auch Komplexe aus polykationischen und polyanionischen Polymeren sowie Coazervate kommen in Betracht.

Als Schutzkolloid einsetzbare Polymere sind insbesondere Polyvinylpyrrolidon, Polyacrylsäure oder Polymethacrylsäure und Copolymere davon mit einem Dicarbonsäureanhydrid einer ethylenisch ungesättigten C₄-C₈-Carbonsäure, wie Maleinsäureanhydrid oder Itaconsäureanhydrid; Polyvinylalkohol und teilverseiftes Polyvinylacetat; Polyacrylamid und Polymethacrylamid und deren teilverseifte Derivate; Polymere aus Monomeren mit einer primären, sekundären oder tertiären Aminogruppe und die N-C₁-C₄-Mono- und N,N-C₁-C₄-Dialkylderivate sowie die mit C₁-C₄-Alkylierungsmitteln quaternisierten Derivate davon; Polyethylenoxide und Polypropylenoxide sowie Blockcopolymere davon; Polyaminosäuren wie Polyasparaginsäure und Polylysin, sowie Kondensate aus Phenylsulfonsäure mit Harnstoff und Formaldehyd und Kondensate aus Naphthalinsulfonsäure mit Formaldehyd.

In einer Ausführungsform der Erfindung kommen bei dem Verfahren neben polymerisationsfähigen Monomeren, z.B. Acrylat-Monomeren und gegebenenfalls einem Effektstoff (E) und/oder gegebenenfalls einem Wirkstoff (W) zusätzlich ein oder mehrere Photoinitiatoren (P) zum Einsatz.

Als Photoinitiatoren können im Allgemeinen solche organischen Verbindungen eingesetzt werden, die UV-Licht absorbieren und dabei hochreaktive Zwischenprodukte (insbesondere Radikale) erzeugen und somit eine Photopolymerisation auslösen können. Geeignete Verbindungsklassen sind Photoinitiatoren vom Benzophenon-Typ, vom Acylphosphinoxid-Typ (wie z.B. das Handelsprodukt Lucirin TPO von BASF, Ludwigshafen, oder Diphenyl-(2,4,6-trimethylbenzoyl)phosphinoxid), vom Bisacylphosphinoxid-Typ, Photoinitiatoren wie das handelsübliche Irgacure (Hersteller Ciba, Schweiz) oder Photoinitiatoren, die Benzoylradikale erzeugen (z.B. 2,2-Dimethoxy-1,2diphenyl-ethanon).

Die Erfindung betrifft auch ein Verfahren zur Herstellung von polymeren Nanopartikeln, bei dem eine Emulsion zum Einsatz kommt, die zusätzlich einen oder mehrere Effektstoffe (E) aus der Gruppe der Farbstoffe, optischen Aufheller, UV-Absorber und Pigmente und/oder einen oder mehrere Wirkstoffe (W) aus der Gruppe der Pestizide, Biozide, Pharmaka und Duftstoffe enthält. Diese Effektstoffe (E) und/oder diese Wirkstoffe (W) werden bevorzugt mit den Monomeren in einem geeigneten Mischungsverhältnis vermischt. Danach kann diese organische Phase in die wässrige Phase (die z. B. den Emulgator bzw. das Dispergiermittel bereits enthält) eingetragen werden, wobei vorzugsweise eine mechanische Mischung erfolgt.

Der Mischvorgang und der gesamte Herstellungsprozess können dabei kontinuierlich oder nicht-kontinuierlich durchgeführt werden. Bevorzugt wird zunächst eine RohEmulsion erzeugt und diese dann unter Eintrag weiterer Scherenergie in eine FeinEmulsion überführt. Unter Feinemulsion wird hierbei eine Emulsion verstanden, in der die Teilchen (bzw. Tröpfchen) der organischen Komponente eine mittlere Teilchengröße von kleiner als 10 µm, insbesondere kleiner als 4 µm beträgt.

Bei dem erfindungsgemäßen Verfahren zur Herstellung von polymeren Nanopartikeln wird zunächst eine Rohemulsion (Voremulsion) hergestellt, die in dem Nicht-Lösemittel emulgierte Tröpfchen der Monomere (und gegebenenfalls weiterer organischer Komponente) enthält. Die Zubereitung der Rohemulsion (Voremulsion) kann auf verschiedene Weisen erfolgen.

Beispielsweise werden zunächst in den Monomeren der Photoinitiator (P), der Effektstoff (E) und/oder der Wirkstoff (W) gelöst, emulgiert oder dispergiert.

Die entstandene Mischung aus Monomeren und gegebenenfalls Photoinitiator (P), Effektstoff (E) und/oder Wirkstoff (W) kann unter niedrig-scherenden Bedingungen (z. B. Rühren) grob emulgiert werden.

Besonders vorteilhaft ist es, die Herstellung der Rohemulsion (Voremulsion) in dem Nicht-Lösemittel in einem kontinuierlichen Verfahren durchzuführen, wobei im Prinzip auch eine Temperaturerhöhung angewendet werden kann. Die so erhaltene Rohemulsion (Voremulsion) enthält relativ große Tropfen der organischen Komponenten in dem Nicht-Lösemittel. Die mittlere Teilchengröße beträgt dabei in der Regel mehr als 5 µm, wobei insbesondere auch zahlreiche deutlich größere Tröpfchen auftreten können, beispielsweise mit einer mittleren Teilchengröße von mehr als 20 µm. Die Rohemulsion (Voremulsion) enthält häufig Dispergiermittel bzw. Emulgatoren und/oder Schutzkolloide. Diese Dispergiermittel bzw. Emulgatoren und/oder Schutzkolloide können zu einem beliebigen Zeitpunkt zur Rohemulsion gegeben werden, sie können jedoch auch bereits in dem Nicht-Lösemittel (N) bei Einbringung der organischen Komponenten vorhanden sein. Geeignete Emulgatoren sind handelsübliche Dispergiermittel bzw. Netzmittel.

Der Eintrag der Scherenenergie kann auf verschiedene Weise erfolgen. Die Rohemulsion (Voremulsion) kann batch-weise in einem Schritt oder in Teilschritten, oder vorzugsweise kontinuierlich behandelt werden. Der Eintrag der Scherenenergie kann dadurch erfolgen, dass die Rohemulsion durch eine kontinuierliche Emulgiervorrichtung geleitet wird. Unter einer kontinuierlichen Emulgiervorrichtung werden Vorrichtungen verstanden, die einen kontinuierlichen Scherenenergieeintrag in eine durch sie hindurch geleitete Emulsion erlauben.

Hierzu zählen beispielsweise Rotor-Stator-Aggregate, wie Zahnkranzdispergiermaschinen oder Kolloidmühlen, und Hochdruckhomogenisatoren. Bei Zahnkranzdispergiermaschinen handelt es sich in der Regel um Vorrichtungen mit mindesten einem Scherelement mit einem feststehenden kreisförmigen geschlitzten Stator und einem innerhalb des Stators rotierenden geschlitzten Rotor, der auf einer drehbar gelagerten Antriebswelle montiert ist. Geeignete Zahnkranzdispergiermaschinen sind im Handel erhältlich.

Kolloidmühlen (siehe Nassrotormühlen) weisen z.B. konisch ausgebildete Rotoren und Statoren auf, deren Oberflächen glatt oder verzahnt sein können. Geeignete Rotor-Stator-Aggregate enthalten häufig mehrere nacheinander geschaltete Scherelemente.

Besonders bevorzugt werden in der vorliegenden Erfindung Hochdruckhomogenisatoren eingesetzt, bei denen die Rohemulsion (Voremulsion) unter einem bestimmten Druck durch feine Düsen gepresst wird.

Die homogenisierende Wirkung beruht auf der Erzeugung turbulenter und/oder laminarer Strömungen und daraus resultierender Schergefälle sowie Kavitation in der Nähe großer Tröpfchen, die dadurch zerreißen. Die Druckdifferenz an der Düse liegt in der Regel zwischen 10 und 1000 bar, vorzugsweise 20 bis 300 bar. Es können dabei z.B. ringförmige Düsen oder Lochdüsen zum Einsatz kommen.

Ebenfalls möglich ist der Einsatz eines so genannten Homogenisierkopfs, der verstellbar sein kann. Lochdüsen sind bevorzugt, insbesondere solche eines Lochdurchmessers von 0,3 bis 0,5 mm. Die Feinemulgierung der Rohemulsion kann auch durch eine Kaskade von Hochdruckhomogenisatoren oder eine Kombination von Rotor/Stator-Aggregaten und Hochdruckhomogenisatoren erfolgen. Besonders bewährt haben sich Emulgiervorrichtungen mit einer als kreisförmige Öffnung ausgebildeten Düse, die ein verstellbar angeordnetes, als konische Spitze ausgebildetes Zerteilelement aufweisen, welches sich wenigstens teilweise in die Öffnung hineinerstreckt. Das Zerteilelement ist so angeordnet, dass es den effektiv der Rohemulsion zur Durchströmung der Öffnung zur Verfügung stehenden Querschnitt begrenzt. Im Falle einer Verstopfung der Öffnung kann diese durch eine Bewegung des Zerteilelementes in die Öffnung hinein und/oder aus ihr heraus leicht wieder beseitigt werden. Geeignete Vorrichtungen sind so genannte Nadelventile, die normalerweise als Dosierventile zur Regulierung des Durchflusses von Gasen oder Flüssigkeiten verwendet werden.

Besonders gute Emulgierergebnisse werden für die oben beschriebenen Rohemulsionen (Voremulsion) mit einer Vorrichtung erzielt, die einen Vorraum sowie einen mit diesem durch eine kreisförmige Öffnung verbundenen Entspannungsraum aufweist. Im Vorraum oder im Entspannungsraum ist ein als eine konische Spitze ausgebildetes Zerteilelement verstellbar angeordnet, welches sich wenigstens teilweise in die Öffnung hineinerstreckt, wobei das Verhältnis der größten Abmessung (d_{E}) des Vorraums quer zur Strömungsrichtung zum Durchmesser (d_{B}) der Öffnung größer als 10 ist. Durch diese Wahl der Abmessung des Vorraums quer zur Strömungsrichtung im Verhältnis zum Durchmesser der Öffnung wird eine starke Beschleunigung der durchströmenden Rohemulsion unmittelbar vor der Öffnung erreicht, wenn das Verhältnis der Länge der Öffnung zum Durchmesser der Öffnung kleiner als 1,0, insbesondere kleiner als 0,6 ist. Der erforderliche Betriebsdruck kann aufgebracht werden, indem die Rohemulsion mit Hilfe einer Pumpe, z.B. einer Kolbenpumpe, auf den Homogenisierdruck verdichtet wird.

Anstelle der Verwendung einer Pumpe kann der Homogenisierdruck auch durch Beaufschlagen des Vorlagegefäßes der Rohemulsion bzw. der Farbstoff-Aufschlämmung mit einem Gas, wie Luft oder Stickstoff, erzeugt werden.

In einer besonderen Ausführungsform wird die Emulsion noch vor der Belichtung inertisiert, d. h. der Sauerstoffgehalt in der Emulsion wird durch z.B. Einblasen von Inertgas (z. B. Stickstoff oder Kohlendioxid) deutlich reduziert.

In einer geeigneten Ausführungsform des erfindungsgemäßen Verfahrens kann die Emulsion auch mehrfach durch eine kontinuierliche Emulgiervorrichtung geführt und dann belichtet werden.

Die Erfindung betrifft auch ein Verfahren zur Herstellung von polymeren Nanopartikeln, bei dem zunächst durch Rühren eine Voremulsion erzeugt wird, und diese dann durch ein Verfahren des Feinemulgierens unter Eintrag von Scherenergie behandelt und anschließend mit einer geeigneten Lichtquelle, z.B. einer UV-Lampe, belichtet und photopolymerisiert wird. Die Erzeugung der Voremulsion, der Verfahrensschritt der Feinemulgierung und die Photopolymerisation können in der Regel bei Temperaturen von 5 bis 90°C, insbesondere 10 bis 50°C, insbesondere auch bei Raumtemperatur durchgeführt werden, wobei die einzelnen Schritte auch bei unterschiedlichen Temperaturen durchgeführt werden können.

In einer Ausführungsform der Erfindung wird bei dem Verfahren zur Herstellung von polymeren Nanopartikeln zunächst eine Voremulsion erzeugt und diese dann durch ein kontinuierliches Verfahren des Feinemulgierens unter Eintrag von Scherenergie behandelt, wobei die emulgierten Teilchen, enthaltend die Monomere, eine mittlere Größe von weniger als 4 µm erhalten. Anschließend wird die Feinemulsion mit einer UV-Lichtquelle belichtet und photopolymerisiert. Hierdurch entstehen kleine Polymerpartikel, die fein verteilt bzw. dispergiert in dem Nicht-Lösungsmittel sind.

Die Erfindung betrifft auch ein Verfahren zur Herstellung von polymeren Partikeln, insbesondere von Nanopartikeln, bei dem das gesamte Verfahren bei einer Temperatur von 10 bis 35°C durchgeführt wird.

Die Erfindung betrifft auch ein Verfahren, bei dem zunächst eine Voremulsion erzeugt wird und diese dann durch beispielsweise ein Rotor-Stator-Verfahren (z.B. durch eine Kolloidmühle oder eine Zahnkranzdispergiermaschiene) oder durch ein Hochdruckhomogenisationsverfahren (bei dem die Rohemulsion unter hohem Druck durch feine Düsen gepresst wird) in eine Feinemulsion überführt wird. Diese Feinemulsion wird bevorzugt gleich bei oder unmittelbar nach der Erzeugung mit einer UV-Lichtquelle belichtet und photopolymerisiert. Dieses kann dadurch erfolgen, dass in der Apparatur nach der Düse bzw. Entspannungskammer eine Belichtungsstrecke vorgesehen wird, durch die die Emulsion geleitet wird.

Hierdurch lässt sich eine Koaleszenz der nicht-polymerisierten Tröpfchen zu größeren Tröpfchen vermeiden oder zumindest deutlich vermindern, was zur Folge hat, dass die erzeugten polymeren Nanopartikel eine homogenere Teilchengrößenverteilung aufweisen. Dieses kann bei Wirkstoff- bzw. Effektstoff-haltigen Partikeln einen wesentlichen Vorteil bieten, da die Abgabegeschwindigkeit des Wirk- bzw. Effektstoffes mit der Partikelgröße der Polymerteilchen korreliert ist. Es lassen sich so verbesserte "Slow-Release"-Formulierungen bereitstellen.

Die vorliegende Erfindung betrifft auch die Verwendung der oben geschilderten Verfahrensschritte bzw. des Verfahrens zur Herstellung von polymeren Nanopartikeln, wobei diese Nanopartikel auch einen oder mehreren Effektstoffen (E) und/oder einen oder mehreren Wirkstoffe (W) enthalten können.

Eine weitere Ausführungsform der Erfindung betrifft feinteilige polymere Partikel, insbesondere Nanopartikel, herstellbar gemäß einem der oben beschriebenen Verfahren. Diese polymeren Partikel können z.B. einen oder mehrere Effektstoffe (E) und/oder einen oder mehreren Wirkstoffe (W) enthalten. Die polymeren Nanopartikel haben bevorzugt eine mittlere Partikelgröße von weniger als 4 µm; insbesondere weisen sie eine mittlere Partikelgröße von 0,01 µm bis 3,8 µm, bevorzugt von 0,05 bis 3,0 µm auf.

Die Erfindung betrifft auch polymere Nanopartikel, die mindestens ein Polyacrylat enthalten und die eine mittlere Partikelgröße von 0,05 µm bis 3,0 µm aufweisen.

Die polymere Nanopartikel enthalten in einer weiteren Ausführungsform mindestens einen Effektstoff (E) aus der Gruppe der Farbstoffe, optischen Aufheller, UV-Absorbern und Pigmente. Dieser Effektstoff ist bevorzugt homogen in dem Polymer verteilt.

Als Pigmente können die gängigen anorganischen natürlichen (z.B. Kreide) oder synthetischen Pigmente (z.B. Titanoxide), aber auch organische Pigmente eingesetzt werden.

Als Effektstoffe können in die polymeren Nanopartikel z.B. zur Steigerung des Weißgrads optische Aufheller einbringen, die durch ihre bläuliche Fluoreszenz (komplementäre Farbe) Vergrauungen und Vergilbungen kompensieren. Geeignet sind hier grundsätzlich alle blau emittierenden Fluoreszenzfarbstoffe, z.B. die kommerziell zugänglichen Produkte, z.B. Ultraphor^{®} (BASF), Leucophor^{®} (Clariant) oder Tinopal^{®} (Ciba) oder andere Produkte aus den chemischen Substanzklassen der Stilbene, Distyrylbiphenyle, Cumarine, Naphthalsäureimide und den über Doppelbindungen verknüpften Benzoxazol- und Benzimidazolsystemen.

Die optischen Aufheller können getrennt oder zusammen mit den Monomeren in den Herstellungsprozess eingeschleust werden. Wird als Effektstoff ein optischer Aufheller eingesetzt, so liegt seine Konzentration im Allgemeinen bei 0,01 bis 10 %, bezogen auf das Gewicht der Monomeren.

Die Erfindung hat auch polymere Nanopartikel zum Gegenstand, die mindestens einen Wirkstoff (E) enthalten. Der Wirkstoff kann insbesondere zu einer der Gruppen der Pestizide (z.B. ein Fungizid oder Herbizid), Biozide (z.B. ein Bacterizid), Pharmaka und Duftstoffe gehören. Der Gehalt an Wirkstoffen lässt sich bei dem erfindungsgemäßen Verfahren gezielt steuern und ist je nach Wirkstoff unterschiedlich. Der Gehalt beträgt im Allgemeinen von 0,001 bis 20 Gew.-%, bezogen auf die Menge der eingesetzten Monomere. Der Wirkstoff ist dabei bevorzugt homogen in den polymeren Teilchen verteilt.

Als Herbizide, die mit den erfindungsgemäßen Nanopartikeln formuliert werden können, sind beispielsweise die folgenden Klassen a1) bis a15) zu nennen:
a1) Lipid Biosynthese Inhibitoren;
a2) Acetolactate Synthase Inhibitoren (ALS inhibitors);
a3) Photosynthese Inhibitoren;
a4) Protoporphyrinogen-IX oxidase inhibitoren;
a5) "Bleacher herbicides";
a6) Enolpyruvyl shikimate 3-phosphate Synthase Inhibitoren (EPSP inhibitors);
a7) Glutamine synthetase inhibitoren;
a8) 7,8-Dihydropteroate synthase Inhibitoren (DHP inhibitors);
a9) Mitose-inhibitoren;
a10) Inhibitoren der Synthese langkettiger Fettsäuren (VLCFA inhibitors);
a11) Cellulose biosynthese Inhibitoren;
a12) "Decoupler herbicides";
a13) Auxin Herbicide;
a14) Auxin transport Inhibitoren;
a15) Herbicide aus der Gruppe benzoylprop, flamprop, flamprop-M, bromobutide, chlorflurenol, cinmethylin, methyldymuron, etobenzanid, fosamine, metam, pyributicarb, oxaziclomefone, dazomet, triaziflam, methyl bromide und endothal.

Aus diesen Klassen a1) to a15) werden als Wirkstoff bevorzugt eingesetzt:
a1) chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate, bensulide, pinoxaden.
a2) amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid, pyrithiobac, flucetosulfuron, orthosulfamuron, pyrimisulfan.
a3) atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, pyridafol.
a4) acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid, bencarbazone.
a5) metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethyl- phenoxy)-2-(4-trifluoromethylphenyl)pyrimidine, siehe EP-A 723960, topramezone, 4-hydroxy-3-{[2-methyl-6-(trifluoromethyl)-3-pyridinyl]carbonyl}bicyclo[3.2.1]oct-3-en-2-one, known from WO 00/15615, 4-hydroxy-3-{[2-(2-methoxyethoxy)methyl-6-(trifluoro-methyl)-3-pyridinyl]carbonyl}bicylo[3.2.1]oct-3-en-2-one, siehe WO 01/94339, 4-hydroxy-3-[4-(methylsulfonyl)-2-nitrobenzoyl]bicyclo[3.2.1]-oct-3-en-2-one, siehe EP-A 338992, 2-[2-chloro-4-(methylsulfonyly3-[(2,2,2-trifluoroethoxy)methyl]-benzoyl]-3-hydroxy-2-cyclohexen-1-one (siehe DE 19846792), pyrasulfotole.
a6) glyphosate;
a7) glufosinate und bilanaphos.
a8) asulam.
a9) benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham, propham.
a10) acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan, tridiphane.
a11) dichlobenil, chlorthiamid, isoxaben, flupoxam.
a12) dinofenate, dinoprop, dinosam, dinoseb, dinoterb, DNOC, etinofen,medinoterb.
a13) clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, clopyralid, fluroxypyr, picloram, triclopyr, benazolin, aminopyralid;
a14) naptalam, diflufenzopyr.
a15) benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, endothal.

Bezüglich der erfindungsgemäß als Wirkstoff einsetzbaren Herbizide wird auf "Farm Chemicals Handbook 2000 Vol. 86, Meister Publishing Company, 2000" sowie auf "W. H. Ahrens, Herbicide Handbook, 7th Edition, Weed Science Society of America, 1994" verwiesen.

Als Fungizide, die in den erfindungsgemäßen Nanopartikeln formuliert werden können, sind beispielsweise zu nennen:
Strobilurine wie z.B. Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-(2,5-Dimethylphenyl-oxymethylen)phenyl)-3-methoxy-acrylsäuremethylester;

Carbonsäureamide wie z.B.
a) Carbonsäureanilide: Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3-Difluormethyl-1-methyl-pyrazol-4-carbonsäure-(3',4'-di-chlor-5-fluor-biphenyl-2-yl)-amid, 3,4-Dichlor-isothiazol-5-carbonsäure-(2-cyano-phenyl)-amid;
b) Carbonsäuremorpholide: Dimethomorph, Flumorph;
c) Benzoesäureamide: Flumetover, Fluopicolide (Picobenzamid), Zoxamide;
d) Sonstige Carbonsäureamide: Carpropamid, Diclocymet, Mandipropamid, N-(2-(4-[3-(4-Chlor-phenyl)-prop-2-inyloxy]-3-methoxy-phenyl)-ethyl)-2-methyl-sulfo-nylamino-3-methyl-butyramid, N-(2-(4-[3-(4-Chlor-phenyl)-prop-2-inyloxy]-3-methoxy-phenyl)-ethyl)-2-ethylsulfonylamino-3-methyl-butyramid;

Azole wie z.B.
a) Triazole: Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, lpconazole, Metconazol, Myclobutanil, Penconazole, Propiconazole, Prothioconazole, Simeconazole, Tebuconazole, Tetraconazole, Triadimenol, Triadimefon, Triticonazole;
b) Imidazole: Cyazofamid, Imazalil, Pefurazoate, Prochloraz, Triflumizole;
c) Benzimidazole: Benomyl, Carbendazim, Fuberidazole, Thiabendazole;
d) Sonstige: Ethaboxam, Etridiazole, Hymexazole;

Stickstoffhaltige Heterocyclylverbindungen wie z.B.
a) Pyridine: Fluazinam, Pyrifenox, 3-[5-(4-Chlor-phenyl)-2,3-dimethyl-isoxazolidin-3-yl]-pyridin;
b) Pyrimidine: Bupirimate, Cyprodinil, Ferimzone, Fenarimol, Mepanipyrim, Nuarimol, Pyrimethanil;
c) Piperazine: Triforine;
d) Pyrrole: Fludioxonil, Fenpiclonil;
e) Morpholine: Aldimorph, Dodemorph, Fenpropimorph, Tridemorph;
f) Dicarboximide: Iprodione, Procymidone, Vinclozolin;
g) sonstige: Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Pyroquilon, Quinoxyfen, Tricyclazole, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on, 3-(3-Brom-6-fluoro-2-methylindol-1-sulfonyl)-[1,2,4]triazol-1-sulfonsäuredimethylamid.

Carbamate und Dithiocarbamate wie z.B.
a) Dithiocarbamate: Ferbam, Mancozeb, Maneb, Metiram, Metam, Propineb, Thiram, Zineb, Ziram;
b) Carbamate: Diethofencarb, Flubenthiavalicarb, Iprovalicarb, Propamocarb, 3-(4-Chlor-phenyl)-3-(2-isopropoxycarbonylamino-3-methyl-butyrytamino)-propionsäuremethylester, N-(1-(1-(4-cyanophenyl)ethylsulfonyl)-but-2-yl) carbaminsäure-(4-fluorphenyl)ester.

Sonstige Fungizide wie z.B.
a) Guanidine: Dodine, Iminoctadine, Guazatine;
b) Organometallverbindungen: Fentin Salze;
c) Schwefelhaltige Heterocyclylverbindungen: Isoprothiolane, Dithianon;
d) Organophosphorverbindungen: Edifenphos, Fosetyl, Fosetyl-aluminium, Iprobenfos, Pyrazophos, Tolclofos-methyl, Phosphorige Säure und ihre Salze;
e) Organochlorverbindungen: Thiophanate Methyl, Chlorothalonil, Dichlofluanid, Tolylfluanid, Flusulfamide, Phthalide, Hexachlorbenzol, Pencycuron, Quintozene;
f) Nitrophenylderivate: Binapacryl, Dinocap, Dinobuton;
g) Sonstige: Spiroxamine, Cyflufenamid, Cymoxanil, Metrafenon.

Als Biozide, die mit den erfindungsgemäßen Nanopartikeln formuliert werden können, sind beispielsweise diverse handelsübliche Bacterizide oder Algizide zu nennen. Biozide kommen in vielen Bereichen zum Einsatz und werden zur Bekämpfung von Bakterien, Pilzen oder Algen verwendet. Bevorzugt werden erfindungsgemäß als Wirkstoff organische Biozide eingesetzt. Beispiele für diese Substanzen sind Chloroisocyanourate, quarternäre Ammoniumverbindungen (Quats), Hydantoine, Isothiazolinone, Parabene, Triclosan, 2-Bromo-2-nitropropan-1,3-diol, Phenoxyethanol oder Hexahydrotriazine.

In einer bevorzugten Ausführungsform werden organische Biozide aus der Gruppe der Isothiazolin-3-one eingesetzt. Der biozide Wirkstoff liegt in der organischen Mischung der Monomere bevorzugt in einer Menge von 0,0001 bis 10 Gew.-%, bevorzugt 0,001 bis 1,5 Gew.-%, jeweils bezogen auf das Gewicht der Monomeren, vor.

Es ist bekannt, Verbindungen aus der Stoffklasse der 3-Isothiazolin-3-one als biozide Komponente in verschiedenen Materialien zu verwenden. In dieser Stoffklasse finden sich sehr wirksame Biozide mit teilweise unterschiedlichem Wirkprofil. Oft werden auch Kombinationen aus verschiedenen 3-Isothiazolin-3-onen, oder auch aus einem oder mehreren 3-Isothaziolin-3-onen mit anderen bekannten bioziden Wirkstoffen benutz. Weitere Beispiele für biozide Komponenten sind in WO 1999/08530 , EP-A 0457435, EP -A 0542721 und WO 2002/17716 aufgeführt.

Als Duftstoffe können in dem erfindungsgemäßen Verfahren übliche Stoffe eingesetzt werden, die einen olfaktorischen Reiz ausüben, beispielsweise wohlriechende Riechstoffe, die im Bereich der Parfümerie Einsatz finden (z.B. Vanilin oder Citral). Der Einsatz von Riechstoffen in den Nanopartikeln ist insbesondere für Haushaltsprodukte und die Kosmetikindustrie von Interesse.

Als pharmazeutische Wirkstoffe können die unterschiedlichsten Pharmaka eingesetzt werden, z. B. Analgetika (wie Ibuprofen), Antidiabetika, HMG-CoA-Reuktase-Inhibitoren, Cholesterinresorptions-Inhibitoren, Gallensäure-sorptions-Inhibitoren, Antioxidantien, Antibiotika, Anti-Hypertensiva, onkologische Wirkstoffe und andere.

Zu dem erfindungsgemäßen Herstellungsverfahren gibt es verschiedene bevorzugte Varianten.

Beim Einbringen der polymerisationsfähigen Monomere in die wässrige Phase hat es sich als vorteilhaft erwiesen, zusätzliche Hilfsstoffe beizufügen. Beispielsweise können ein oder mehrere Dispergiermittel bzw. Emulgatoren eingesetzt werden. Diese haben unter anderem die Aufgabe, zu einer schnellen und möglichst vollständigen Belegung der Grenzflächen zwischen organischer und wässriger Phase zu führen.

Als Dispergiermittel finden vorzugsweise zum Beispiel Komponenten aus der Gruppe der Polyethylenglykol-ether (wie beispielsweise das handelsübliche Produkt Lutensol^{®} TO-8, Hersteller BASF, Ludwigshafen) Verwendung. Das oder die Dispergiermittel werden in der Regel in einer Menge von 1 bis 20 Gew.-%, insbesondere 2 bis 10 Gew.-% bezogen auf die eingesetzten Monomere verwendet.

In einer bevorzugten Ausführungsform der Erfindung werden neben den polymerisationsfähigen Monomeren (M) zusätzlich ein oder mehrere Photoinitiatoren (P) verwendet. Als Photoinitiator kann beispielsweise ein Acyl-phosphinoxid (wie zum Beispiel das handelsübliche Produkt Lucirin^{®} TPO, Hersteller BASF) eingesetzt werden. Der Photoinitiator wird in der Regel in einer Menge von 0,2 bis 5 Gew.-%, insbesondere 0,5 bis 3 Gew.-% bezogen auf das eingesetzte Monomer zugesetzt.

In einer weiteren Ausführungsform der Erfindung wird zunächst eine Emulsion hergestellt, die neben dem polymerisationsfähigen Monomer (M) und gegebenenfalls anderen Hilfsstoffen im Nicht-Lösemittel (N), vorzugsweise Wasser, einen zusätzlichen Effektstoff (E) enthält. Bei diesen Effektstoffen (E) handelt es sich beispielsweise um Farbstoffe (wie zum Beispiel Fluoreszenz- oder NIR-Farbstoffe), optische Aufheller, UV-Absorber oder Pigmente.

Vorzugsweise kommen bei der Herstellung der polymeren Nanopartikeln mindestens zwei unterschiedliche Monomere (M) zum Einsatz, wodurch die physikalischen Eigenschaften des polymeren Produktes genauer "eingestellt" werden können.

Die polymerisationsfähigen Monomere (M) werden bevorzugt zusammen mit dem Nicht-Lösemittel (N) Wasser verwendet. Bei dem Verfahren zur Herstellung von polymeren Nanopartikeln wird bevorzugt zunächst durch mechanisches Rühren eine Voremulsion erzeugt und diese dann durch gängige Verfahren des Feinemulgierens behandelt und anschließend mit einer geeigneten Lichtquelle für einen Zeitraum von etwa 0,5 Sekunden bis 3 Minuten belichtet und photopolymerisiert.

Als Effektstoff (E) können sie z.B. eine oder mehrere (z. B. zwei) Komponenten aus der Gruppe der Farbstoffe, optischen Aufheller, UV-Absorber und Pigmente enthalten.

Bei der Durchführung des erfindungsgemäßen Verfahrens werden die Effektstoffe (E) in der Regel physikalisch eingelagert. Je nach Art des eingesetzten Effektstoffes (E) kann die Struktur des polymeren Nanopartikels gezielt beeinflusst werden. Es können auch mehrere Effektstoffe (E) zusammen eingesetzt werden.

Durch die Einbringung des polymerisationsfähigen Monomers und der Hilfsstoffe in das Nicht-Lösemittel wird in der Regel eine Mini-Emulsion von Öl in Wasser erzeugt. Diese kann dann direkt mit einer geeigneten Lichtquelle (L), wie beispielsweise einer UV-Lampe, belichtet werden. Dabei kommt es zu einer spontanen Photopolymerisation der zahlreichen "kleinen Öltröpfchen". Es resultiert eine Dispersion von festen, tropfenförmigen Polymerteilchen. Es ist jedoch auch möglich, das erfindungsgemäße Verfahren in einem kontinuierlichen Prozess durchzuführen.

Beispielsweise wird in einem großen Rührgefäß eine "Voremulsion" aus den einzelnen Komponenten (M), (D), (N), (P) und/oder (E) und/oder (W) erzeugt. Diese Voremulsion wird dann nach bekannten Verfahren der Fein-Emulgiertechnologie (wie beispielsweise Anwendung von Ultraschall, Hochdruckemulgieren, Rotor-Stator-Verfahren) in eine "Feinemulsion" überführt. Anschließend kann die Photopolymerisation durch Behandlung der Feinemulsion mit einer geeigneten Lichtquelle (L) erfolgen.

Als Lichtquelle dient insbesondere ein UV-Strahler, beispielsweise eine Hg-Lampe, eine Metall-dotierte HG-Lampe, eine Xenonlampe oder ein Excimer-Strahler.

Die nach dem erfindungsgemäßen Verfahren hergestellten polymeren Nanopartikel lassen sich zahlreichen Anwendungen zuführen. Beispielsweise können sie als Lichtschutzmittel für Kunststoffe oder in der Kosmetik und Dermatologie für den Schutz der. Haut vor ultraviolettem Licht eingesetzt werden, beispielsweise wenn als Effektstoff (E) ein UV-Absorber eingesetzt wird. Auch die Verwendung in der Kunststoff- und Papier-industrie z. B. mit aufhellenden Nanopartikeln (die beispielsweise einen optischen Aufheller als Effektstoff enthalten) und die Verwendung als Markierstoffe, zum Beispiel die Herstellung von Geldscheinen oder fälschungssicheren Dokumenten, ist möglich.

Bei dem Einsatz von Wirkstoffen ergibt sich die Möglichkeit, polymere Partikel herzustellen, die den Wirkstoff nur allmählich abgeben ("controlled release formulations"). Dieses ist insbesondere im pharmazeutischen Bereich und für Pflanzenschutzmittel von Bedeutung.

Die Erfindung wird durch die nachfolgenden Beispiele näher erläutert, ohne darauf beschränkt zu sein.

### Beispiel 1

### 1A) Herstellung von Nanopartikeln aus Polyether-Polyacrylat

Als Monomer wurde Laromer 8863 (ein ethoxyliertes Trimethylol-propan-triacrylat, Hersteller: BASF AG) eingesetzt, als Photoinitiator wurde Lucirin TPO (ein aromatisches Acylphosphinoxid, Hersteller: BASF AG, 1,0 Gew.-% bezogen auf das Gewicht der Monomere) verwendet. Man mischte in einem ersten Schritt zunächst 2 g der Monomeren mit dem Photoinitiator. In einem zweiten Gefäß wurde zu 18 g Wasser das Dispergiermittel Lutensol TO-8 (ein Oxoalkohol-ethoxylat, Hersteller: BASF AG; 4 Gew.-% bezogen auf die Menge an Monomeren) gegeben.

Anschließend wurde die Mischung aus Monomeren und Photoinitiator unter Rühren zu der wässrigen Mischung mit dem Dispergiermittel gegeben. Die so erhaltene Rohemulsion konnte durch 10-minütige Anwendung von Ultraschall (Ultraschallgerät "Sonifier 250" von Hersteller Branson, 150 W) in eine Feinemulsion überführt werden.

Diese Feinemulsion wurde dann einer 2-minütigen UV-Belichtung mit einer Galliumdotierten Quecksilberlampe unterzogen, wodurch die Polymerisation der Monomeren erfolgte.

Die gebildeten Polymer-Teilchen wurden nach der durch die UV-Belichtung initiierten Polymerisation abzentrifugiert und getrocknet. Man erhielt Nanopartikel in Form von kleinen, aneinander haftenden Kügelchen aus Polyacrylat. Diese wurden elektronenmikroskopisch untersucht. Dabei zeigte sich ein Durchmesser der meisten Teilchen von 0,2 bis 0,8 µm, einzelne Teilchen hatten einen Durchmesser von 0,8 bis 2 µm.

### 1B) Herstellung von Nanopartikeln aus Laromer POB4F

In Analogie zu dem Beispiel 1A wird ausgehend von 2 g der Monomerkomponente Laromer POB4F (Hersteller: BASF AG) und dem Photoinitiator Lucirin TPO (ein aromatisches Acylphosphinoxid, Hersteller: BASF AG, 1,0 Gew.-% bezogen auf das Gewicht der Monomere) eine Mischung erzeugt. In einem zweiten Gefäß werden zu 18 g Wasser das Dispergiermittel Lutensol TO-8 (ein Oxoalkohol-ethoxylat, Hersteller: BASF AG; 5 Gew.-% bezogen auf die Menge an Monomeren) gegeben.

Anschließend wird die Mischung aus Monomeren und Photoinitiator unter intensivem Rühren zu der wässrigen Mischung mit dem Dispergiermittel gegeben. Die so erhaltene Rohemulsion kann einer Hochdruckemulgierung unterzogen (50 bar, 25°C, Düsendurchmesser 0,3 mm) und in eine Feinemulsion überführt werden. Diese Feinemulsion wird dann direkt bei Austritt aus der Mikronisier-Kammer einer UV-Belichtung mit einer Quecksilberlampe unterzogen, wobei die Photo-Polymerisation der Monomeren erfolgt. Die Polymer-Teilchen sind Nanopartikel mit Durchmessern von etwa 0,2 bis 0,8 µm.

### 1C) Herstellung von Nanopartikeln aus Laromer 8987

In Analogie zu dem Beispiel 1A wird ausgehend von 1 g der Monomerkomponente Laromer 8987 (Hersteller: BASF AG) und dem Photoinitiator Lucirin TPO (ein aromatisches Acylphosphinoxid mit einem UV-Absorptionsmaximum von etwa 380 nm; Hersteller: BASF AG, 1,0 Gew.-% bezogen auf das Gewicht der Monomere) eine Mischung erzeugt. In einem zweiten Gefäß werden zu 18 g Wasser das Dispergiermittel Lutensol TO-8 (ein Oxoalkohol-ethoxylat, Hersteller: BASF AG; 3 Gew.-% bezogen auf die Menge an Monomeren) gegeben.

Anschließend wird die Mischung aus Monomeren und Photoinitiator unter Rühren zu der wässrigen Mischung mit dem Dispergiermittel gegeben. Die so erhaltene Rohemulsion kann einer Hochdruckemulgierung unterzogen und in eine Feinemulsion überführt werden. Diese Feinemulsion wird dann direkt bei Austritt aus der Mikronisier-Kammer einer UV-Belichtung mit einer Quecksilberlampe (150 Watt) unterzogen, wobei die Photo-Polymerisation der Monomere erfolgt. Die Polymer-Teilchen sind Nanopartikel mit Durchmessern von etwa 0,2 bis 0,8 µm.

### Beispiel 2

### 2A) Herstellung von Nanopartikeln unter Einsatz eines Fluoreszenz-Farbstoffes

Analog zur Herstellung in Beispiel 1a wurden Nanopartikel unter zusätzlichem Einsatz von 2 Gew.-%, bezogen auf das Gewicht der Monomere, des handelsüblichen Fluoreszenz-Farbstoffes Lumogen-F-Rot 300 (Hersteller BASF) hergestellt. Der Farbstoff wurde dabei der Mischung aus Monomeren und Photoinitiator zugesetzt und diese Mischung dann in ein Gefäß enthaltend die wässrige Phase gegeben. Man erhielt polymere Nanopartikel, die homogen mit dem Effektstoff "durchgefärbt" sind. Sie lassen sich z. B. zur Herstellung eines fluoreszierenden Anstrichs oder als Markierungsmittel verwenden.

### 2B) Herstellung von Nanopartikeln unter Einsatz eines Fluoreszenz-Farbstoffes

Analog zur Herstellung in Beispiel 2a) können Nanopartikel unter zusätzlichem Einsatz von 4 Gew.-% , bezogen auf das Gewicht der Monomere, des handelsüblichen Fluoreszenz-Farbstoffes Lumogen-F-Rot 300 hergestellt werden. Der Farbstoff kann dabei der Mischung aus Monomeren und Photoinitiator zugesetzt und diese Mischung dann in ein Gefäß enthaltend die wässrige Phase gegeben werden. Man erhält polymere Nanopartikel, die homogen, aber mit mehr des Effektstoffs "durchgefärbt" sind. Sie lassen sich z. B. zur Herstellung eines fluoreszierenden Anstrichs verwenden.

### 2c) Herstellung von Nanopartikeln unter Einsatz eines Fluoreszenz-Farbstoffes

Analog zur Herstellung in Beispiel 1c werden Nanopartikel unter zusätzlichem Einsatz von 2 Gew.-%, bezogen auf das Gewicht der Monomere, des handelsüblichen Fluoreszenz-Farbstoffes Palanil Leuchtrot G (Hersteller: Dystar, Leverkusen) hergestellt. Der Farbstoff wird dabei der Mischung aus Monomeren und Photoinitiator zugesetzt und diese Mischung dann in ein Gefäß enthaltend die wässrige Phase gegeben. Man erhält polymere Nanopartikel, die homogen mit dem Effektstoff "durchgefärbt" sind.

### Beispiel 3

### 3a) Herstellung von Nanopartikeln unter Einsatz von optischem Aufheller als Effektstoff

Bei der Herstellung von polymeren Nanopartikeln mit optischen Aufhellern ist es möglich, die Aufheller alleine oder auch als Mischungen anzuwenden. Bei den optischen Aufhellern handelt es sich in der Regel um bekannte und handelsübliche Produkte. Sie sind beispielsweise in Ullmann's Encyclopedia of Industrial Chemistry, 5. Auflage, Bd. A18, S. 156-161, beschrieben oder können nach den dort genannten Methoden erhalten werden.

Bevorzugt verwendet man einen oder mehrere optische Aufheller aus der Klasse der Cumarine, Naphthalimide und der Styrylverbindungen, insbesondere der Cyanosubstituierten 1,4-Di-stryryl-benzole.

Zu der in Beispiel 1a genannten Emulsion wurden als Effektstoff 3 Gew.-%, bezogen auf das Gewicht der Monomere, des handelsüblichen optischen Aufhellers Lumogen-Violett 570 (Hersteller: BASF) gegeben. Nach Belichtung und Abtrennung erhält man polymere Nanopartikel, die homogen sind und den optischen Aufheller enthalten. Sie können als Additive zur Aufhellung in der Kunststoff und Papier-Industrie eingesetzt werden.

### 3b) Herstellung von Nanopartikeln unter Einsatz von Ultraphor SFGplus als Effektstoff

Zu der in Beispiel 1a genannten Emulsion werden als Effektstoff 2 Gew.-%, bezogen auf das Gewicht der Monomere, des handelsüblichen optischen Aufhellers Ultraphor SFGplus (Hersteller: BASF) gegeben. Diese wird in einem Hochdruckemulgierverfahren in eine Feinemulsion überführt und beim Austritt aus der Düse mit UV belichtet. Nach Belichtung und Abtrennung erhält man polymere Nanopartikel, die homogen sind und den optischen Aufheller enthalten.

### 3c) Herstellung von Nanopartikeln unter Einsatz von Ultraphor RN als Effektstoff

Zu der in Beispiel 1a genannten Mischung aus Monomeren und Photoinitiator werden als Effektstoff 1 Gew.-%, bezogen auf das Gewicht der Monomere, des handelsüblichen optischen Aufhellers Ultraphor RN (Hersteller: BASF) gegeben. Diese wird bei Raumtemperatur einem Hochdruckemulgierverfahren unterzogen und beim Austritt aus der Düse mit UV belichtet. Nach Belichtung und Abtrennung erhält man polymere Nanopartikel, die homogen sind und den optischen Aufheller enthalten.

### Beispiel 4

### 4a) Herstellung von Nanopartikeln unter Einsatz eines UV-Absorbers

Zu der in Beispiel 1a genannten Emulsion wurden als Effektstoff 1,5 Gew.-%, bezogen auf das Gewicht der Monomere, des handelsüblichen UV-Absorbers Uvinul 3039 (UV-Absorber vom Cyanacrylat-Typ; Hersteller BASF) gegeben. Nach Belichtung und Abtrennung erhielt man polymere Nanopartikel, die homogen sind und den UV-Absorber enthalten. Sie können z. B. als Lichtschutzmittel für Lacke und Kunststoffe oder in der Kosmetik-Herstellung verwendet werden.

### 4b) Herstellung von Nanopartikeln unter Einsatz von Uvinul 3008

Zu der in Beispiel 1a genannten Emulsion werden als Effektstoff 2,0 Gew.-%, bezogen auf das Gewicht der Monomere, des handelsüblichen UV-Absorbers Uvinul 3008 (UV-Absorber vom Hydroxybenzophenon-Typ; Hersteller BASF) gegeben. Nach Belichtung der durch Ultraschall oder Hochdruckemulgierung erzeugten Feinemulsion und Abtrennung kann man polymere Nanopartikel, die homogen sind und den UV-Absorber enthalten, isolieren. Sie können z. B. in der Kosmetik-Herstellung verwendet werden.

### 4c) Herstellung von Nanopartikeln unter Einsatz von Uvinul 3008

Zu der in Beispiel 1a genannten Mischung von Monomeren und einem handelsüblichen Photoinitiator vom Benzophenon-Typ (1 Gew.-% bezogen auf die Menge an Monomeren) werden als Effektstoff 8,0 Gew.-%, bezogen auf das Gewicht der Monomere, des handelsüblichen UV-Absorbers Uvinul 3008 (UV-Absorber vom Hydroxybenzophenon-Typ; Hersteller BASF) gegeben. Nach Belichtung der durch Hochdruckemulgierung erzeugten Feinemulsion und Abtrennung kann man polymere Nanopartikel gewinnen, die homogen sind und in den Partikeln den UV-Absorber enthalten.

### 4d) Herstellung von Nanopartikeln unter Einsatz von Tinuvin P

Zu der in Beispiel 1a genannten Emulsion werden als Effektstoff 3,0 Gew.-%, bezogen auf das Gewicht der Monomere, des handelsüblichen UV-Absorbers Tinuvin P (UV-Absorber vom Benzotriazol-Typ; Hersteller Ciba, Schweiz) gegeben.

Nach der Belichtung der durch Ultraschall oder Hochdruckemulgierung erzeugten Feinemulsion und Abtrennung kann man polymere Nanopartikel, die homogen sind und den UV-Absorber enthalten, nach gängigen Verfahren isolieren. Sie können als Lichtschutzmittel verwendet werden.

### Beispiel 5

### 5a) Herstellung von Nanopartikeln unter Zusatz von Epoxyconazol als Wirkstoff

Zu der in Beispiel 1a genannten Mischung von Monomeren und Photoinitiator werden als Wirkstoff 5 Gew.-%, bezogen auf das Gewicht der Monomere, des handelsüblichen Pestizids Epoxyconazol (Getreidefungizid, Hersteller BASF) gegeben. Nach Belichtung der erzeugten Feinemulsion und Abtrennung kann man polymere Nanopartikel gewinnen, die homogen sind und in den Partikeln das Pestizid enthalten.

Durch Zusatz von 0,5 Gew.% Lumogen-F Rot als Färbemittel und zusätzlich von 5 Gew.-%, bezogen auf das Gewicht der Monomere, des handelsüblichen Pestizids Epoxyconazol als Wirkstoff lassen sich Nanopartikel herstellen, die homogen gefärbt sind und in der polymeren Matrix den Wirkstoff enthalten.

### 5b) Herstellung von Nanopartikeln unter Zusatz einer Biozidkomponente

Zu der in Beispiel 1a genannten Mischung von Monomeren und Photoinitiator werden als Wirkstoffkomponente 4 Gew.-%, bezogen auf das Gewicht der Monomere, des handelsüblichen Biozids 2-Methyl-2H-isothiazol-3-on gegeben. Nach Belichtung der erzeugten Feinemulsion und Abtrennung kann man polymere Nanopartikel gewinnen, die homogen sind und in den Partikeln das Biozid enthalten.

### 5c) Herstellung von Nanopartikeln unter Zusatz eines pharmazeutischen Wirkstoffs

Zu der in Beispiel 1a genannten Mischung von Monomeren und Photoinitiator werden als Wirkstoff 5 Gew.-%, bezogen auf das Gewicht der Monomere, des handelsüblichen Pharmakon Ibuprofen gegeben. Nach Belichtung der erzeugten Feinemulsion und Abtrennung kann man polymere Nanopartikel gewinnen, die homogen sind und in den Partikeln den pharmazeutischen Wirkstoff enthalten.

### 5d) Herstellung von Nanopartikeln unter Zusatz von Vanillin

Zu der in Beispiel 1a genannten Mischung von Monomeren und Photoinitiator werden als Wirkstoff 1 Gew.-%, bezogen auf das Gewicht der Monomere, des handelsüblichen Geruchsstoffs Vanillaldehyd gegeben. Nach Belichtung der erzeugten Feinemulsion und Abtrennung erhält man polymere Nanopartikel, die einen deutlichen Vanillegeruch aufweisen und in den Partikeln den Duftstoff homogen verteilt enthalten.

## Patentansprüche

1. Verfahren zur Herstellung von polymeren Nanopartikeln, bei dem aus einem oder mehreren polymerisationsfähigen Monomeren (M) sowie einem oder mehreren Dispergiermitteln (D) und/oder einem oder mehreren Effektstoffen (E) aus der Gruppe der Farbstoffe, optischen Aufheller, UV-Absorber und Pigmente und/oder einem oder mehreren Wirkstoffen (W) aus der Gruppe der Pestizide, Biozide, Pharmaka und Duftstoffe in einem Nicht-Lösemittel (N) zunächst eine Voremulsion erzeugt wird und diese dann durch ein kontinuierliches Verfahren des Feinemulgierens unter Eintrag von Scherenergie behandelt wird, wobei die emulgierten Teilchen enthaltend die Monomere eine mittlere Größe von 0,01 µm bis 3,8 µm erhalten, und anschließend mit einer UV-Lichtquelle (L) belichtet und photopolymerisiert wird,
wobei als Nicht-Lösemittel (N) Wasser eingesetzt wird,
und wobei das kontinuierliche Verfahren des Feinemulgierens unter Anwendung von Ultraschall, Hochdruckemulgieren und/oder Rotor-Stator-Verfahren erfolgt.

2. Verfahren zur Herstellung von polymeren Nanopartikeln gemäß Anspruch 1, **dadurch gekennzeichnet, dass** mindestens zwei unterschiedliche Monomere (M) zum Einsatz kommen.

3. Verfahren zur Herstellung von polymeren Nanopartikeln gemäß einem der Ansprüche 1 oder 2, **dadurch gekennzeichnet, dass** die polymerisationsfähigen Monomere (M) zunächst mit einem Photoinitiator (P) und ein oder mehreren Effektstoffen (E) und/oder ein oder mehreren Wirkstoffen (W) vermischt werden, anschließend aus dieser Mischung zusammen mit dem Nicht-Lösemittel (N) und dem Dispergiermittel (D) eine Emulsion erzeugt wird, und die so gebildete Feinemulsion einem Belichtungsschritt mit UV-Licht unterzogen wird.

4. Verfahren zur Herstellung von polymeren Nanopartikeln gemäß einem der Ansprüche 1 bis 3, **dadurch gekennzeichnet, dass** neben polymerisationsfähigen Acrylat-Monomeren und einem Effektstoff (E) und/oder einem Wirkstoff (W) zusätzlich ein oder mehrere Photoinitiatoren (P) verwendet werden.

5. Verfahren zur Herstellung von polymeren Nanopartikeln gemäß einem der Ansprüche 1 bis 4, **dadurch gekennzeichnet, dass** das Verfahren bei einer Temperatur von 10 bis 50°C durchgeführt wird.

6. Verfahren zur Herstellung von polymeren Nanopartikeln gemäß einem der Ansprüche 1 bis 5, **dadurch gekennzeichnet, dass** zunächst eine Voremulsion erzeugt wird und diese dann durch ein Rotor-Stator-Verfahren oder durch ein Hochdruckhomogenisationsverfahren in eine Feinemulsion überführt und diese mit einer UV-Lichtquelle belichtet und photopolymerisiert wird.

## Claims

1. A process for the preparation of polymeric nanoparticles in which, from one or more polymerizable monomers (M) and one or more dispersants (D) and/or one or more effect substances (E) from the group consisting of dyes, optical brighteners, UV absorbers and pigments and/or one or more active substances from the group consisting of pesticides, biocides, pharmaceuticals and fragrances in a nonsolvent (N), a preemulsion is first produced and this is then treated by a continuous process for fine emulsification with introduction of shear energy, the emulsified particles comprising the monomers achieving a mean size of from 0.01 µm to 3.8 µm, and subsequently illuminated with a UV light source (L) and photopolymerized,
water being used as nonsolvent (N),
and the continuous process for fine emulsification being carried out using ultrasound, high-pressure emulsifications and/or rotor/stator processes.

2. The process for the preparation of polymeric nanoparticles according to claim 1, wherein at least two different monomers (M) are used.

3. The process for the preparation of polymeric nanoparticles according to either of claims 1 and 2, wherein the polymerizable monomers (M) are first mixed with a photoinitiator (P) and one or more effect substances (E) and/or one or more active substances (A), an emulsion is subsequently produced from this mixture, together with the nonsolvent (N) and the dispersant (D), and the fine emulsion thus formed is subjected to an illuminating stage with UV light.

4. The process for the preparation of polymeric nanoparticles according to any of claims 1 to 3, wherein use is additionally made, in addition to polymerizable acrylate monomers and an effect substance (E) and/or an active substance (A), of one or more photoinitiators (P).

5. The process for the preparation of polymeric nanoparticles according to any of claims 1 to 4, which is carried out at a temperature of 10 to 50°C.

6. The process for the preparation of polymeric nanoparticles according to any of claims 1 to 5, wherein a preemulsion is first produced and this is then converted to a fine emulsion using a rotor/stator process or using a high-pressure homogenization process and the fine emulsion is illuminated with a UV light source and photopolymerized.

## Revendications

1. Procédé de fabrication de nanoparticules polymères, selon lequel une pré-émulsion est tout d'abord formée à partir d'un ou de plusieurs monomères polymérisables (M), ainsi que d'un ou de plusieurs agents dispersants (D) et/ou d'une ou de plusieurs substances à effet (E) choisies dans le groupe constitué par les colorants, les azurants optiques, les absorbeurs UV et les pigments, et/ou d'une ou plusieurs substances actives (W) choisies dans le groupe constitué par les pesticides, les biocides, les produits pharmaceutiques et les parfums, dans un non-solvant (N), et celle-ci est ensuite traitée par un procédé continu d'émulsification fine avec apport d'énergie de cisaillement, les particules émulsifiées contenant les monomères ayant une taille moyenne de 0,01 µm à 3,8 µm, puis exposée à une source de lumière UV (L) et photopolymérisée,
l'eau étant utilisée en tant que non-solvant (N),
et le procédé continu d'émulsification fine ayant lieu en utilisant des ultrasons, une émulsification haute pression et/ou un procédé rotor-stator.

2. Procédé de fabrication de nanoparticules polymères selon la revendication 1, **caractérisé en ce qu'**au moins deux monomères (M) différents sont utilisés.

3. Procédé de fabrication de nanoparticules polymères selon l'une quelconque des revendications 1 ou 2, **caractérisé en ce que** les monomères polymérisables (M) sont tout d'abord mélangés avec un photoinitiateur (P) et une ou plusieurs substances à effet (E) et/ou une ou plusieurs substances actives (W), puis une émulsion est formée à partir de ce mélange avec le non-solvant (N) et l'agent dispersant (D), et l'émulsion fine ainsi formée est soumise à une étape d'exposition à une lumière UV.

4. Procédé de fabrication de nanoparticules polymères selon l'une quelconque des revendications 1 à 3, **caractérisé en ce qu'**un ou plusieurs photoinitiateurs (P) sont utilisés en plus des monomères d'acrylate polymérisables et d'une substance à effet (E) et/ou d'une substance active (W).

5. Procédé de fabrication de nanoparticules polymères selon l'une quelconque des revendications 1 à 4, **caractérisé en ce que** le procédé est réalisé à une température de 10 à 50°C.

6. Procédé de fabrication de nanoparticules polymères selon l'une quelconque des revendications 1 à 5, **caractérisé en ce qu'**une pré-émulsion est tout d'abord formée, et celle-ci est ensuite transformée en une émulsion fine par un procédé rotor-stator ou par un procédé d'homogénéification haute pression, et celle-ci est exposée à une source de lumière UV et photopolymérisée.
